(19) Europäisches Patentamt / European Patent Office / Office européen des brevets

(11) **EP 3 615 965 B1**

(12) **FASCICULE DE BREVET EUROPEEN**

(45) Date de publication et mention de la délivrance du brevet:
**30.06.2021 Bulletin 2021/26**

(21) Numéro de dépôt: **18719208.3**

(22) Date de dépôt: **27.04.2018**

(51) Int Cl.:
***G01T 1/20*** *(2006.01)*

(86) Numéro de dépôt international:
**PCT/EP2018/060911**

(87) Numéro de publication internationale:
**WO 2018/197684 (01.11.2018 Gazette 2018/44)**

(54) **DÉTECTEUR POUR RADIOGRAPHIE À HAUTE ÉNERGIE ET ENSEMBLE D'IMAGERIE ASSOCIÉ**

DETEKTOR FÜR HOCHENERGETISCHE RADIOGRAPHIE UND ZUGEHÖRIGE BILDGEBUNGSANORDNUNG

DETECTOR FOR HIGH-ENERGY RADIOGRAPHY AND ASSOCIATED IMAGING ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2017 FR 1753780**

(43) Date de publication de la demande:
**04.03.2020 Bulletin 2020/10**

(73) Titulaire: **FRAMATOME**
**92400 Courbevoie (FR)**

(72) Inventeur: **PETERZOL-PARMENTIER, Angéla**
**71000 Macon (FR)**

(74) Mandataire: **Lavoix**
**2, place d'Estienne d'Orves**
**75441 Paris Cedex 09 (FR)**

(56) Documents cités:
**EP-A1- 1 995 608     EP-A1- 2 889 643**
**EP-A1- 2 916 145     US-A1- 2005 023 479**

- **M. YAO ET AL: "X-ray imaging plate performance investigation based on a Monte Carlo simulation tool", SPECTROCHIMICA ACTA. PART B: ATOMIC SPECTROSCOPY., vol. 103-104, 1 janvier 2015 (2015-01-01), pages 84-91, XP055436794, US ISSN: 0584-8547, DOI: 10.1016/j.sab.2014.12.001**

EP 3 615 965 B1

**Description**

La présente invention concerne un détecteur pour radiographie à haute énergie.

Il est connu de l'état de la technique des détecteurs matriciels à conversion indirecte. Il est courant de les utiliser avec une source de rayons X. Le capteur transforme, par exemple, les rayons X incidents en lumière qui est à son tour transformée en signal électrique. La mesure de l'intensité du signal électrique permet d'obtenir l'intensité des rayons X incidents.

Cependant, ces détecteurs ne sont pas optimisés pour des sources à haute énergie.

En particulier, un modèle courant de détecteur comprend notamment un écran métallique en cuivre ayant notamment pour fonction de filtrer le signal incident.

Lorsque l'écran métallique est traversé par des photons, une première partie de ces photons interagit avec le cuivre par effet photoélectrique et une deuxième partie interagit par diffusion Compton. La diffusion Compton correspond au phénomène observé lorsqu'un photon incident entre en collision avec un électron libre d'un atome et qu'un électron est éjecté de l'atome, tandis que le photon est diffusé. Le photon diffusé n'a pas la même direction que le photon incident et est de moindre énergie. Ainsi, le phénomène de la diffusion Compton entraîne une dégradation de la résolution spatiale et un gain faible en sortie de l'écran métallique. Au contraire, lorsqu'un photon interagit par effet photoélectrique, le photon est absorbé par l'atome et toute son énergie se transmet à un électron des couches profondes, qui se retrouve éjecté par l'atome. Après l'absorption du photon, le photoélectron émis a une énergie Ee= Eph - Eb où Eb est l'énergie de liaison du photoélectron et Eph est l'énergie du photon incident. A des énergies et des numéros atomiques où ce processus est important, l'électron émis est absorbé sur une distance très courte, de l'ordre de quelques centaines de micromètres ($\mu$m) de telle manière que si un photoélectron sort de l'écran métallique pour être ensuite absorbé par la couche du scintillateur, la perte en résolution spatiale est négligeable en comparaison à la diffusion Compton.

Une pluralité de facteurs intervient sur le fait que les photons vont en moyenne plus ou moins interagir par effet photoélectrique ou par diffusion Compton.

Cependant, les détecteurs connus engendrent une probabilité importante pour chaque photon d'interagir par diffusion Compton et ont une mauvaise résolution spatiale lorsque le rayon incident est à haute énergie.

EP 2 916 145 A1 décrit un dispositif de détection, comprenant un substrat, sur lequel une nervure de barrière est prévue, et un détecteur de lumière, qui se font face. Des cellules divisées par la nervure de barrière sont formées dans un espace entre le substrat et le détecteur de lumière, les cellules sont remplies d'un phosphore, un pixel de détection de lumière est agencé sur une surface du détecteur de lumière qui n'est pas contact avec la nervure de la barrière, et une couche adhésive est formé entre la nervure de la barrière et le phosphore, et le détecteur de lumière.

Un but de l'invention est donc d'améliorer le gain d'un détecteur dans la cadre de la radiographie à haute énergie en maintenant une bonne résolution spatiale.

A cet effet, l'invention a pour objet un détecteur pour radiographie à haute énergie, selon la revendication 1, comprenant dans cet ordre:

- un écran métallique agencé pour recevoir un rayonnement incident, au moins une partie du rayonnement incident étant transmis à travers l'écran métallique et formant un rayonnement transmis,
- un composant scintillateur agencé pour convertir le rayonnement transmis par l'écran métallique en lumière, et
- une couche de détection agencée pour détecter l'intensité de la lumière émise par le composant scintillateur,

dans lequel :

- l'écran métallique est réalisé en uranium, préférentiellement appauvri, et l'écran a une épaisseur comprise entre 125 $\mu$m et 175 $\mu$m, ou
- l'écran métallique est réalisé en thorium et l'écran a une épaisseur comprise entre 225 $\mu$m et 275 $\mu$m, ou
- l'écran métallique est réalisé en bismuth et l'écran a une épaisseur comprise entre 225 $\mu$m et 275 $\mu$m.

Selon des modes particuliers de l'invention, le détecteur présente l'une ou plusieurs caractéristiques suivantes, prise(s) isolément ou suivant toute(s) combinaison(s) techniquement possible(s):

- l'écran métallique est en contact avec le composant scintillateur,
- le détecteur comprend une couche support, la couche support étant comprise entre l'écran métallique et le composant scintillateur,
- le détecteur comprend une couche support, la couche support présentant une épaisseur comprise entre 1 $\mu$m et 300 $\mu$m,
- le composant scintillateur est réalisé en oxysulfure de gadolinium, et
- le composant scintillateur a une épaisseur comprise entre 100 $\mu$m et 300 $\mu$m.

L'invention a en outre pour objet un ensemble d'imagerie radiographique comprenant une source de rayonnement ionisant ayant une énergie comprise entre 100 keV (kilo-électron-volt) et 50 MeV (méga-électron-volt) et un détecteur comme décrit plus haut.

Selon des modes particuliers de l'invention, l'ensemble d'imagerie radiographique présente la caractéristique suivante :

- la source est une source gamma d'Iridium 192, ayant une énergie moyenne comprise entre 370 keV et 390 keV, de sélénium 75 ou de cobalt 60.

L'invention sera mieux comprise à la lecture de la description qui va suivre donnée uniquement à titre d'exemple, et faite en se référant aux dessins annexés, sur lesquels :

- la figure 1 est une vue schématique en coupe d'un premier mode de réalisation d'un détecteur selon l'invention,
- la figure 2 est une vue schématique en coupe d'un deuxième mode de réalisation d'un détecteur selon l'invention,
- la figure 3 est un diagramme représentant un rapport de coefficients d'atténuation en fonction du matériau,
- la figure 4 est une courbe représentant le gain obtenu par des exemples d'écran métallique en différents matériaux et pour une épaisseur comprise entre 0 et 200 $\mu$m,
- la figure 5 est un diagramme représentant le gain obtenu par des exemples d'écran métallique de la figure 4 pour une épaisseur égale à 400 $\mu$m,
- la figure 6 est un diagramme représentant le gain obtenu pour les exemples d'écran métallique de la figure 5 pour une épaisseur égale à 500 $\mu$m,
- la figure 7 est un diagramme représentant le gain obtenu pour les exemples d'écran métallique de la figure 5 pour une épaisseur égale à 600 $\mu$m,
- la figure 8 est un diagramme représentant le gain obtenu pour les exemples d'écran métallique de la figure 5 pour une épaisseur égale à 700 $\mu$m, et
- la figure 9 est un diagramme représentant le gain obtenu pour les exemples d'écran métallique de la figure 5 pour une épaisseur égale à 800 $\mu$m.

L'invention concerne un ensemble d'imagerie radiographique comprenant une source de rayonnement ionisant et un détecteur.

La source de rayonnement ionisant a une énergie comprise entre 100 keV (kilo-électron-volt) et 50 MeV (méga-électron-volt), plus particulièrement entre 200 keV et 20 MeV.

Pour rappel, un électron-volt est définie comme l'énergie cinétique acquise par un électron accéléré depuis le repos par une différence de potentiel d'un volt.

Dans un mode de réalisation, la source est une source d'iridium 192, c'est-à-dire l'isotope de l'iridium ayant un nombre de masse égal à 192. La source d'iridium 192 a, par exemple, une énergie moyenne comprise entre 370 keV et 390 keV.

Alternativement, la source est une source de sélénium 75 ou de cobalt 60.

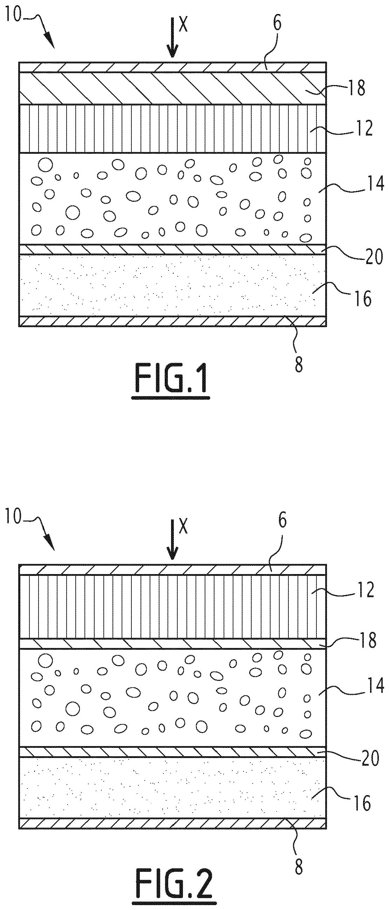

Un premier mode de réalisation du détecteur 10 est représenté sur la figure 1, dans lequel le détecteur 10 est plan.

Le détecteur définit une surface d'entrée 6 et une surface de sortie 8.

La surface d'entrée 6 est sensiblement parallèle à la surface de sortie 8 et définit un plan transversal. La direction perpendiculaire au plan transversal est appelée direction longitudinale X.

Le détecteur comprend, dans cet ordre, un écran métallique 12, un composant scintillateur 14 et une couche de détection 16.

Dans le premier mode de réalisation, le détecteur 10 comprend en outre une couche support 18 sur l'écran métallique 12 au niveau de la surface d'entrée 6 et une couche de protection 20 entre le composant scintillateur 14 et la couche de détection 16.

Ainsi, dans l'ordre, le détecteur 10 comprend :

- la couche support 18,
- l'écran métallique 12,
- le composant scintillateur 14,
- la couche de protection 20 et
- la couche de détection 16.

L'écran métallique 12, le composant scintillateur 14 et la couche de détection 16 sont agencées sous la forme de couches.

Chaque couche est plane et présente une épaisseur respective, définie comme la dimension de la couche selon la direction longitudinale, sensiblement constante.

La couche support 18 et la couche de protection 20 sont planes et présentent une épaisseur constante respective.

L'écran métallique 12, le composant scintillateur 14 et la couche de détection 16 présentent, par exemple, la même surface parallèlement au plan transversal et sont superposés. Ladite surface est, par exemple, rectangulaire. La surface a une surface, par exemple, comprise entre 1 cm$^2$ et 50 cm$^2$.

La couche support 18 et la couche de protection 20 présentent, par exemple, la même surface parallèlement au plan transversal que l'écran métallique 12, le composant scintillateur 14 et la couche de détection 16.

En variante, l'ensemble des couches ne présentent pas la même surface parallèlement au plan transversal et sont superposés au moins dans une zone active.

La couche support 18 permet notamment de fournir un support au scintillateur.

La couche support 18 est réalisée en matériau plastique et présente une épaisseur comprise entre 1 $\mu$m et 300 $\mu$m.

La couche support 18 est, par exemple, réalisée en poly (téréphtalate d'éthylène) ou PET. Le PET est, par exemple, commercialisé sous la marque Mylar ®. Il transmet au moins 90% de la lumière dans le spectre du visible et plus de 95% des rayons X.

L'écran métallique 12 est agencé pour recevoir un rayonnement incident.

Au moins une partie du rayonnement incident est transmis à travers l'écran métallique 12 et forme un rayonnement transmis.

L'écran 12 est réalisé en un métal pur en bismuth (Bi), en thorium (Th) ou en uranium (U). On appelle métal pur, un métal dont la pureté est strictement supérieure à 99,00%, c'est-à-dire que la quantité du métal dans l'écran est strictement supérieure à 99,00%.

Dans un mode de réalisation particulier, l'écran métallique 12 est réalisé en uranium, préférentiellement appauvri. L'écran a une épaisseur comprise entre 125 $\mu$m et 175 $\mu$m.

En variante, l'écran métallique est réalisé en thorium. L'écran a une épaisseur comprise entre 225 $\mu$m et 275 $\mu$m.

En variante, l'écran métallique est réalisé en bismuth. L'écran a une épaisseur comprise entre 225 $\mu$m et 275 $\mu$m.

Le composant scintillateur 14 est agencé pour convertir le rayonnement transmis par l'écran métallique 12 en lumière. On appelle dans la suite lumière toute onde électromagnétique ayant une ou des longueurs d'onde comprise dans un spectre, par exemple comprise entre 380 nm et 780 nm.

Le composant scintillateur 14 est par exemple réalisé en oxysulfure de gadolinium. L'oxysulfure de gadolinium a pour formule chimique $Gd_2O_2S$ et est usuellement noté GOS.

Alternativement, le composant scintillateur 14 est réalisé en un des matériaux suivants : CsI:TI, $Gd_2O_2S$:Tb, CsI:Na, NAI:TI, $CaWO_4$, $ZnWO_4$, $CdWO_4$, $Bi_4Ge_3O_{12}$, $Lu_{1.8}Yb_{0.2}SiO_5$:Ce, $Gd_2SiO_5$:Ce, BaF-Cl:$Eu^{2+}$, $BaSO_4$:$Eu^{2+}$, BaFBr: $Eu^{2+}$, LaOBr:$Tb^{3+}$, LaO-Br:$Tm^{3+}$, $La_2O_2S$:$Tb^{3+}$, $Y_2O_2S$:$Tb^{3+}$, $YTaO_4$, $YTaO_4$:Nb, ZnS:Ag, (Zn,Cd)S:Ag, $ZnSiOa$:$Mn^{2+}$, CsI, LiI:$Eu^{2+}$, $PbWO_4$, $Bi_4Si_3O_{12}$, $Lu_2SiO_5$:$Ce^{3+}$, $YAlOa$:$Ce^{3+}$, CsF, $CaF_2$:$Eu^{2+}$, $BaF_2$, $CeF_3$, $Y_{1.34}Gd_{0.6}O_3$:$Eu^{3+}$, Pr, $Gd_2O_2S$:$Pr^{3+}$, Ce, SCGI, HFG:$Ce^{3+}$ (5%) et $C_{14}H_{10}$.

Le composant scintillateur 14 a une épaisseur comprise entre 100 $\mu$m et 300 $\mu$m.

L'écran métallique 12 est en contact étroit ou direct avec le composant scintillateur 14. Un tel contact étroit permet notamment d'avoir un gain supérieur du détecteur sur le rayonnement, notamment pour des énergies inférieures au méga électron-volt.

La couche de protection 20 est réalisée en matériau plastique, par exemple, en PET.

La couche de protection 20 présente une épaisseur inférieure à 30 $\mu$m, préférentiellement inférieur à 15 $\mu$m, par exemple, comprise entre 5 $\mu$m et 15 $\mu$m. Une faible épaisseur permet notamment d'avoir une meilleure résolution spatiale.

La couche de détection 16 est agencée pour détecter l'intensité de la lumière émise par le composant scintillateur 14 sur un spectre donné. Le spectre donné est compris dans le domaine du visible, c'est-à-dire entre 380 nm et 780 nm, plus particulièrement dans le domaine du visible du bleu ou du vert.

La couche de détection comprend, par exemple, une matrice de photodiodes. Le pas entre les photodiodes, couramment appelé « *pixel pitch* », est compris entre 25$\mu$m et 200$\mu$m.

Chaque photodiode est apte à convertir la lumière incidente en un signal électrique. Une relation entre l'intensité de la lumière incidente et un paramètre du signal électrique, comme la tension, est connue sous la forme d'une courbe caractéristique de la photodiode.

Les photodiodes de la matrice sont contiguës, de sorte que l'ensemble de la lumière émise par le composant scintillateur est reçue par les photodiodes.

La couche de détection 16 est donc apte à mesurer l'intensité lumineuse reçue sur le spectre donné en un point représenté par une photodiode.

Un deuxième mode de réalisation du détecteur est représenté sur la figure 2.

Seuls les éléments par lesquels le deuxième mode de réalisation du détecteur diffère du premier mode de réalisation sont décrits par la suite. Les éléments similaires entre le premier mode et le deuxième mode de réalisation ont une même référence.

Dans le deuxième mode de réalisation, la position de l'écran métallique 12 et celle de la couche support 18 relativement aux autres éléments du détecteur 10 sont échangées. En particulier, la couche support 18 est située entre l'écran métallique 12 et le composant scintillateur 14.

Le fonctionnement de l'ensemble d'imagerie comprenant un détecteur selon le premier mode de réalisation va maintenant être décrit dans une application où cet ensemble image un élément.

L'élément est tout élément susceptible d'être imagé avec une source ayant une énergie comprise entre 100keV et 1MeV, plus particulièrement une source gamma d'iridium 192.

L'élément est, par exemple, une soudure épaisse, notamment supérieure ou égale à 80 millimètres (mm), ou difficile d'accès, un composant épais, une tubulure ayant une épaisseur comprise entre 75 mm et 90 mm.

Alternativement, l'élément est une pièce de fonderie ou forgée.

La source de rayonnement ionisant émet des rayons en direction de l'élément à imager. Les rayons interagissent avec l'élément, de sorte que les rayons sont modifiés en fonction de différents paramètres de l'élément, par exemple, le matériau, l'épaisseur, la présence de défauts, etc.

Les rayons se dirigent ensuite vers le détecteur 10 et forment un rayonnement incident en entrée du détecteur 10, plus particulièrement sur la surface d'entrée 6. Le rayonnement incident en entrée du détecteur contient le rayonnement transmis par l'élément à imager et celui diffusé par ce dernier.

L'écran métallique 12 reçoit le rayonnement incident, notamment après que les rayons aient traversé la couche support 18.

Une partie du rayonnement incident est transmis par l'écran métallique 12, c'est-à-dire qu'il traverse l'écran métallique 12 sans interagir avec lui, et forme un rayonnement transmis.

Une partie du rayonnement incident interagit avec l'écran métallique 12 principalement par effet photoélectrique, qui est le phénomène, qui préserve au mieux la résolution spatiale du système d'imagerie.

Le rayonnement incident est susceptible d'interagir avec l'écran métallique 12 par d'autres phénomènes, par exemple, par diffusion Compton. Des phénomènes secondaires, comme la fluorescence et/ou le rayonnement de Bremstralung, sont aussi possibles. Des électrons sont également susceptibles d'être générés et émis par l'écran métallique 12.

Le rayonnement transmis par l'écran métallique 12 et tous les rayonnements secondaires (électrons et photons) générés par l'écran métallique 12 atteignent alors le composant scintillateur 14.

Ces rayonnements transmis et générés sont convertis par le composant scintillateur 14 en lumière. Plus l'intensité des rayonnements qui atteignent le composant scintillateur 14 est importante, plus l'intensité de la lumière est élevée. Il existe, par exemple, une relation linéaire entre l'énergie déposée dans le composant scintillateur 14 par tous les rayonnements en entrée du composant scintillateur 14 et l'intensité lumineuse en sortie du composant scintillateur 14.

La lumière traverse alors la couche de protection 20.

La couche de détection 16 détecte ensuite l'intensité de la lumière sur le spectre donné qu'elle reçoit. Plus particulièrement, chaque photodiode détecte l'intensité lumineuse reçue et la convertit en un signal électrique selon sa courbe caractéristique. Ainsi, la couche de détection 16 mesure l'intensité lumineuse en une matrice de points et la convertit en une matrice de signal électrique.

Chaque signal électrique est représentatif d'une caractéristique de l'élément à imager en un point ou une zone.

Chaque signal électrique est converti en une information, par exemple, en un niveau de gris, de sorte à former une image de l'élément à imager.

L'image permet notamment de repérer des défauts dans l'élément susceptibles de présenter des points de faiblesse, par exemple, dans une soudure.

Un ensemble d'imagerie comprenant un détecteur selon le deuxième mode de réalisation fonctionne similairement à ce qui a été décrit précédemment.

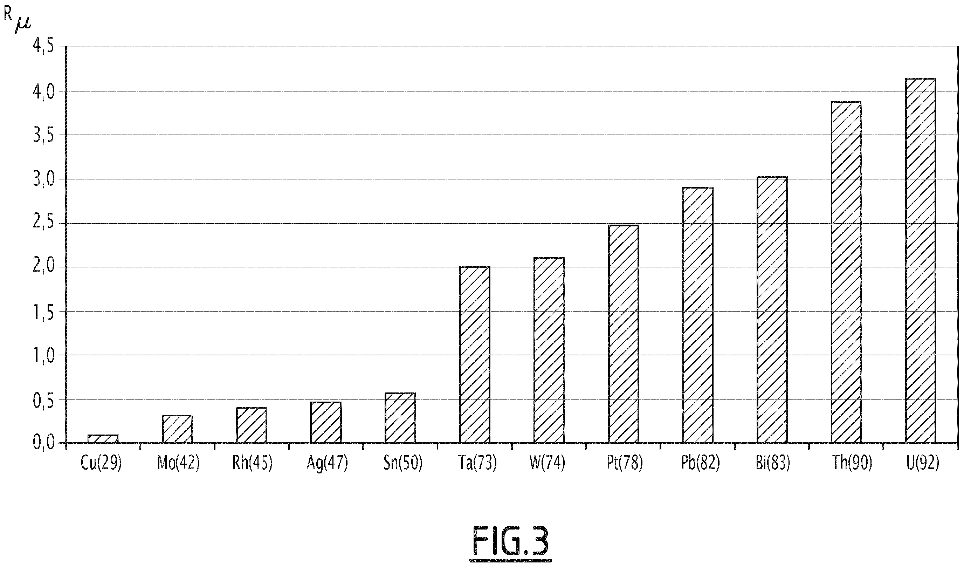

Pour visualiser certains avantages de l'utilisation d'un écran réalisé en un métal ayant un numéro atomique strictement supérieur à 70, un rapport $R_\mu$ a été calculé pour différents métaux et représenté pour chaque métal sur la figure 3. Le rapport $R_\mu$ est indépendant de l'épaisseur de l'écran métallique 12.

La source de rayonnement est identique pour tous les calculs. Il s'agit ici d'une source gamma d'iridium 192.

Le rapport $R_\mu$ est le rapport entre un coefficient d'atténuation linéaire par effet photoélectrique et un coefficient d'atténuation linéaire par diffusion Compton. Les coefficients d'atténuation linéaire par effet photoélectrique et par diffusion Compton sont calculés comme une moyenne pondérée sur le spectre de l'iridium 192 des coefficients d'atténuation, respectivement, par effet photoélectrique et par diffusion Compton aux énergies du spectre.

Le calcul du coefficient moyen est réalisé avec la formule suivante :

$$< \mu > = \sum_{i=1}^{N} \mu(E_i)P(E_i) \quad (1)$$

avec P(Ei) la probabilité d'avoir un photon d'énergie Ei dans le spectre de l'Ir192, $< \mu >$ la moyenne pondérée du coefficient d'atténuation et $\mu(Ei)$ le coefficient d'atténuation pour le photon d'énergie Ei. Pour le calcul des coefficients d'atténuation, on utilise, par exemple, la base de données XCOM de NIST.

Le rapport $R_\mu$ est alors défini ainsi :

$$R_\mu = \frac{< \mu_{ph} >}{< \mu_{Compton} >} \quad (2)$$

Ainsi, plus le rapport $R_\mu$ est élevé, plus la probabilité relative pour qu'un rayon incident interagisse avec l'écran métallique par effet photoélectrique plutôt que par diffusion Compton est élevée.

Le cuivre (Cu), le molybdène (Mo), le rhodium (Rh), l'argent (Ag) et l'étain (Sn) ont respectivement un numéro atomique égal à 29, 42, 45, 47 et 50, c'est-à-dire strictement inférieur à 70. Chaque écran métallique réalisé en un de ces métaux a un rapport $R_\mu$ strictement inférieur à 0,75, c'est-à-dire qu'il est plus probable pour chaque photon du rayon incident qu'il interagisse par diffusion Compton que par effet photoélectrique.

Le tantale (Ta), le tungstène (W), le platine (Pt), le plomb (Pb), le bismuth (Bi), le thorium (Th) et l'uranium (U) ont respectivement un numéro atomique égal à 73, 74, 78, 82, 83, 90 et 92, c'est-à-dire strictement supérieur à 70. Chaque écran métallique réalisé en un de ces métaux a un rapport $R_\mu$ supérieur ou sensiblement égal à 2, c'est-à-dire qu'il est plus probable pour chaque photon du rayon incident qu'il interagisse par effet photoélectrique par rapport par diffusion Compton.

L'utilisation selon l'invention de bismuth (Bi), thorium (Th) et uranium (U) permet donc notamment de limiter la diffusion Compton dans l'écran métallique, de sorte à avoir une résolution spatiale et un gain améliorés par rapport à un écran en cuivre ou en molybdène.

Pour visualiser l'augmentation du gain avec un écran réalisé en un métal ayant un numéro atomique strictement supérieur à 70 et ayant une épaisseur comprise entre 20 $\mu$m et 900 $\mu$m, un gain G a été calculé pour différents matériaux et pour différentes épaisseurs x de l'écran métallique.

La source de rayonnement est identique pour tous les calculs. Il s'agit ici d'une source gamma d'iridium 192.

Le composant scintillateur 14 est ici réalisé en oxysulfure de gadolinium et a une épaisseur sensiblement égale à 208 $\mu$m.

Le gain G est défini comme le rapport entre l'énergie totale $E_M$ déposée sur le composant scintillateur 14 avec un détecteur selon la configuration décrite dans le premier mode de réalisation et l'énergie totale $E_0$ déposée sur le composant scintillateur 14 en l'absence d'écran métallique, soit $G = E_M / E_0$.

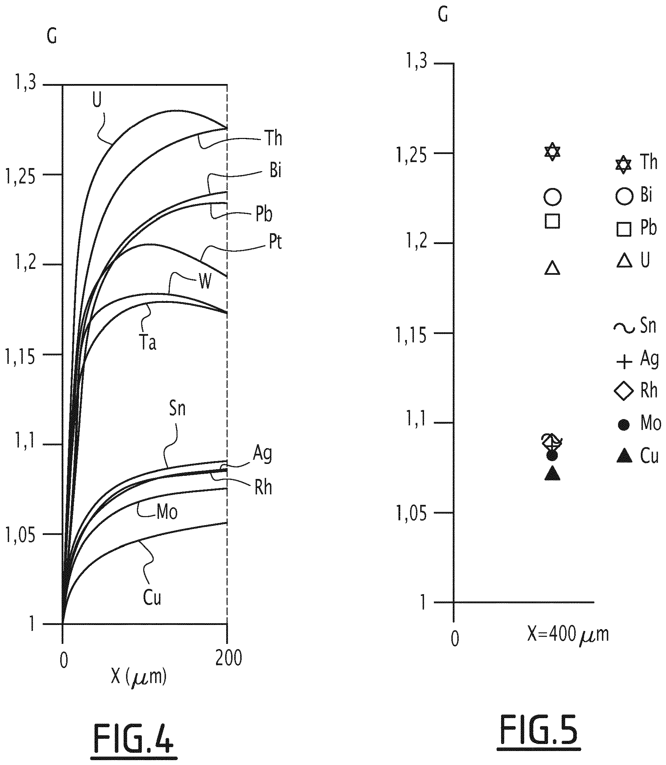

La figure 4 est une courbe représentant le gain obtenu pour une épaisseur comprise entre 0 et 200 $\mu$m pour différents matériaux.

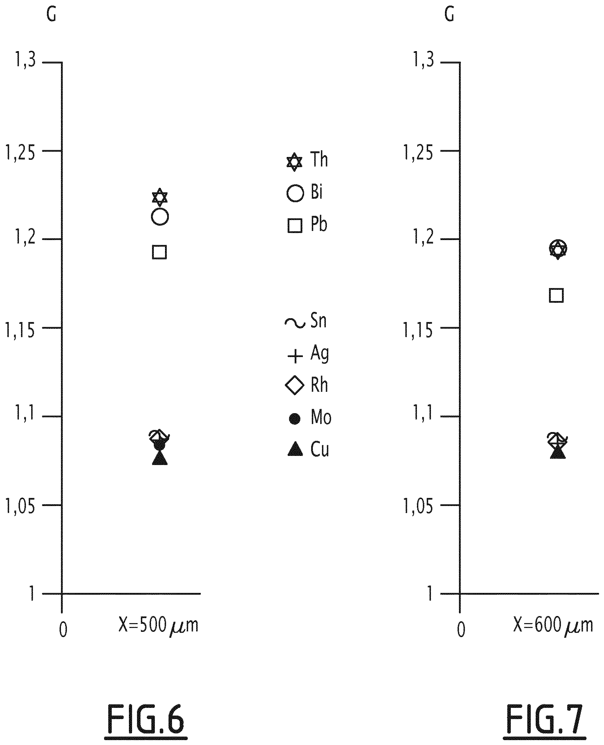

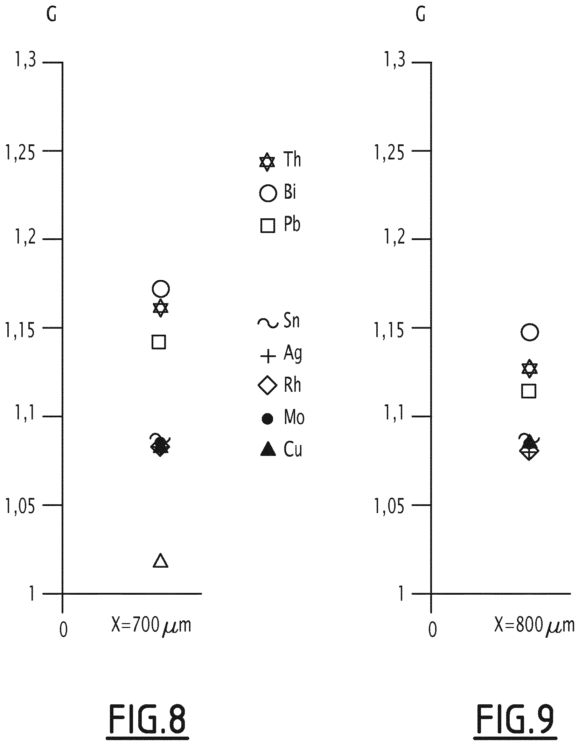

Les figures 5, 6, 7, 8 et 9 représentent respectivement le gain obtenu pour une épaisseur égale à 400 $\mu$m, 500 $\mu$m, 600 $\mu$m, 700 $\mu$m et 800 $\mu$m pour différents matériaux.

Le gain obtenu pour le cuivre (Cu), le molybdène (Mo), le rhodium (Rh), l'argent (Ag) et l'étain (Sn) est strictement inférieur à 1,10 pour toute épaisseur comprise entre 0 et 800 $\mu$m.

Le gain obtenu pour le tantale (Ta), le tungstène (W), le platine (Pt), le plomb (Pb), le bismuth (Bi), le thorium (Th) et l'uranium (U) est strictement supérieur à 1,15 pour toute épaisseur comprise entre 0 et 200 $\mu$m.

Le gain obtenu pour le plomb (Pb), le bismuth (Bi), le thorium (Th) et l'uranium (U) est strictement supérieur à 1,15 pour une épaisseur de 400 $\mu$m.

Le gain obtenu pour le plomb (Pb), le bismuth (Bi) et le thorium (Th) est strictement supérieur à 1,15 pour des épaisseurs de 500 $\mu$m et 600 $\mu$m et strictement supérieur à 1,10 pour des épaisseurs de 700 $\mu$m et 800 $\mu$m.

Ainsi, l'utilisation de tantale (Ta), tungstène (W), platine (Pt), plomb (Pb), bismuth (Bi), thorium (Th) et uranium (U) permet notamment d'obtenir un gain supérieur par rapport à un écran en cuivre ou en molybdène.

Il a notamment été calculé que le gain maximal pour le tantale (Ta), le tungstène (W), le platine (Pt), le plomb (Pb), le bismuth (Bi), le thorium (Th) et l'uranium (U) est compris entre 1,18 et 1,29 dans les conditions préalablement décrites.

De plus, le gain maximal pour des écrans réalisés en tantale, tungstène, platine, plomb, bismuth, thorium et uranium est atteint pour des épaisseurs comprises entre 50 $\mu$m et 300 $\mu$m.

En particulier, le gain maximal pour un détecteur comprenant un écran en uranium appauvri est obtenu pour une épaisseur comprise entre 125 $\mu$m et 175 $\mu$m, et dans le cas du thorium le gain maximal est obtenu pour une épaisseur comprise entre 225 $\mu$m et 275 $\mu$m.

Cela permet donc de sélectionner l'épaisseur de l'écran métallique pour obtenir un gain maximal en fonction de la nature du métal préalablement choisi.

Un tel ensemble d'imagerie permet donc d'obtenir un gain optimisé et une bonne résolution spatiale, en particulier pour une source gamme d'iridium 192. Un gain optimisé permet notamment de réduire le temps d'exposition de l'élément à imager.

Alternativement, la source de l'ensemble d'imagerie est un accélérateur linéaire qui émet des rayons à haute énergie, par exemple, comprise entre 1 MeV et 25 MeV. Un tel ensemble d'imagerie est notamment susceptible d'être utilisé pour un examen radiographique effectué, par exemple, avant de débuter une séance de radiothérapie.

Plus généralement, le détecteur de l'invention est susceptible d'être utilisé dans l'imagerie nucléaire.

## Revendications

1. Détecteur (10) pour radiographie à haute énergie, comprenant dans cet ordre:

   - un écran métallique (12) agencé pour recevoir un rayonnement incident, au moins une partie du rayonnement incident étant transmis à travers l'écran métallique et formant un rayonnement transmis,
   - un composant scintillateur (14) agencé pour convertir le rayonnement transmis par l'écran métallique en lumière, et
   - une couche de détection (16) agencée pour détecter l'intensité de la lumière émise par le composant scintillateur,

   ledit détecteur (10) étant **caractérisé en ce que** ledit écran métallique (12) présente l'une des caractéristiques suivantes :

   - l'écran métallique (12) est réalisé en uranium, préférentiellement appauvri, et a une épaisseur comprise entre 125 $\mu$m et 175 $\mu$m, ou
   - l'écran métallique (12) est réalisé en thorium et a une épaisseur comprise entre 225 $\mu$m et 275 $\mu$m, ou
   - l'écran métallique (12) est réalisé en bismuth et a une épaisseur comprise entre 225 $\mu$m et 275 $\mu$m.

2. Détecteur selon la revendication 1, **caractérisé en ce que** le détecteur est plan.

3. Détecteur selon la revendication 1 ou 2, **caractérisé en ce que** l'écran métallique (12) est en contact avec le composant scintillateur (14).

4. Détecteur selon la revendication 1 ou 2, **caractérisé en ce que** le détecteur comprend une couche support (18), la couche support (18) étant comprise entre l'écran métallique (12) et le composant scintillateur (14).

**5.** Détecteur selon l'une quelconque des revendications 1 à 4, **caractérisé en ce que** le détecteur comprend une couche support (18), la couche support (18) présentant une épaisseur comprise entre 1 μm et 300 μm.

**6.** Détecteur selon l'une quelconque des revendications 1 à 5, **caractérisé en ce que** le composant scintillateur (14) est réalisé en oxysulfure de gadolinium.

**7.** Détecteur selon l'une quelconque des revendications 1 à 6, **caractérisé en ce que** le composant scintillateur (14) a une épaisseur comprise entre 100 μm et 300 μm.

**8.** Ensemble d'imagerie radiographique comprenant une source de rayonnement ionisant ayant une énergie comprise entre 100 keV (kilo-électron-volt) et 50 MeV (méga-électron-volt) et un détecteur (10) selon l'une quelconque des revendications 1 à 7.

**9.** Ensemble d'imagerie selon la revendication 8, **caractérisé en ce que** la source est une source gamma d'Iridium 192, ayant une énergie moyenne comprise entre 370 keV et 390 keV, de sélénium 75 ou de cobalt 60.

**Patentansprüche**

**1.** Detektor (10) für Hochenergie-Radiographie, welcher in dieser Reihenfolge aufweist:

- einen metallischen Schirm (12), welcher angeordnet ist, um eine einfallende Strahlung zu empfangen, wobei zumindest ein Teil der einfallenden Strahlung durch den metallischen Schirm transmittiert wird und eine transmittierte Strahlung bildet,
- eine Szintillator-Komponente (14), welche angeordnet ist, um die mittels des metallischen Schirms transmittierte Strahlung in Licht umzuwandeln, und
- eine Schicht zur Detektion (16), welche angeordnet ist, um die Intensität des Lichts zu detektieren, welches mittels der Szintillator-Komponente ausgesendet wird,

wobei der besagte Detektor (10) **dadurch gekennzeichnet ist, dass** der besagte metallische Schirm (12) eine der folgenden Eigenschaften hat:

- der metallische Schirm (12) ist aus Uran hergestellt, vorzugsweise abgereichert, und hat eine Dicke, welche zwischen 125 μm und 175 μm

liegt, oder
- der metallische Schirm (12) ist aus Thorium hergestellt und hat eine Dicke, welche zwischen 225 μm und 275 μm liegt, oder
- der metallische Schirm (12) ist aus Wismut hergestellt und hat eine Dicke, welche zwischen 225 μm und 275 μm liegt.

**2.** Detektor gemäß Anspruch 1, **dadurch gekennzeichnet, dass** der Detektor eben ist.

**3.** Detektor gemäß Anspruch 1 oder 2, **dadurch gekennzeichnet, dass** der metallische Schirm (12) in Kontakt mit der Szintillator-Komponente (14) ist.

**4.** Detektor gemäß Anspruch 1 oder 2, **dadurch gekennzeichnet, dass** der Detektor eine Trageschicht (18) aufweist, wobei die Trageschicht (18) zwischen dem metallischen Schirm (12) und der Szintillator-Komponente (14) enthalten ist.

**5.** Detektor gemäß irgendeinem der Ansprüche 1 bis 4, **dadurch gekennzeichnet, dass** der Detektor eine Trageschicht (18) aufweist, wobei die Trageschicht (18) eine Dicke hat, welche zwischen 1 μm und 300 μm liegt.

**6.** Detektor gemäß irgendeinem der Ansprüche 1 bis 5, **dadurch gekennzeichnet, dass** die Szintillator-Komponente (14) aus Gadoliniumoxysulfid hergestellt ist.

**7.** Detektor gemäß irgendeinem der Ansprüche 1 bis 6, **dadurch gekennzeichnet, dass** die Szintillator-Komponente (14) eine Dicke hat, welche zwischen 100 μm und 300 μm liegt.

**8.** Anordnung zur radiographischen Abbildung, welche eine Quelle für ionisierende Strahlung mit einer Energie, welche zwischen 100 keV (Kiloelektronenvolt) und 50 MeV (Megaelektronenvolt) liegt, und einen Detektor (10) gemäß irgendeinem der Ansprüche 1 bis 7 aufweist.

**9.** Anordnung zur Abbildung gemäß Anspruch 8, **dadurch gekennzeichnet, dass** die Quelle eine Gamma-Quelle aus Iridium-192 mit einer mittleren Energie, welche zwischen 370 keV und 390 keV liegt, aus Selen-75 oder aus Kobalt-60 ist.

**Claims**

**1.** A detector (10) for high-energy radiography, comprising, in the following order:

- a metal screen (12) arranged to receive incident radiation, at least part of the incident radiation being transmitted through the metal screen and forming a transmitted radiation,
- a scintillator component (14) arranged to convert the radiation transmitted by the metal screen into light, and
- a detection layer (16) arranged to detect the intensity of the light emitted by the scintillator component,

the detector (10) being **characterized in that** the metal screen (12) has one of the following characteristics:

- the metal screen (12) is made from uranium, preferably depleted, and has a thickness between 125 μm and 175 μm, or
- the metal screen (12) is made from thorium and has a thickness between 225 μm and 275 μm, or
- the metal screen (12) is made from bismuth and has a thickness between 225 μm and 275 μm.

2. The detector according to claim 1, **characterized in that** the detector is planar.

3. The detector according to claim 1 or 2, **characterized in that** the metal screen (12) is in contact with the scintillator component (14).

4. The detector according to claim 1 or 2, **characterized in that** the detector comprises a support layer (18), the support layer (18) being between the metal screen (12) and the scintillator component (14).

5. The detector according to any one of claims 1 to 5, **characterized in that** the detector comprises a support layer (18), the support layer (18) having a thickness between 1 μm and 300 μm.

6. The detector according to any one of claims 1 to 5, **characterized in that** the scintillator component (14) is made from gadolinium oxysulfide.

7. The detector according to any one of claims 1 to 6, **characterized in that** the scintillator component (14) has a thickness between 100 μm and 300 μm.

8. A radiographic imaging assembly comprising an ionizing radiation source having an energy between 100 keV (kilo-electron-volt) and 50 MeV (mega-electron-volt) and a detector (10) according to any one of claims 1 to 7.

9. The imaging assembly according to claim 8, **characterized in that** the source is an iridium-192 gamma source, with an average energy of between 370 keV and 390 keV, or selenium 75 or cobalt 60.

FIG.1

FIG.2

FIG.3

EP 3 615 965 B1

**FIG.4**

**FIG.5**

FIG.6

FIG.7

FIG.8

FIG.9

**EP 3 615 965 B1**

## RÉFÉRENCES CITÉES DANS LA DESCRIPTION

**Documents brevets cités dans la description**

- EP 2916145 A1